# EUROPÄISCHE PATENTSCHRIFT

(11) **EP 0 861 977 B1**
(45) Veröffentlichungstag und Bekanntmachung des Hinweises auf die Patenterteilung: **27.06.2001**
(21) Anmeldenummer: 98102865.7
(22) Anmeldetag: 19.02.1998
(51) Int. Cl.: F02D 9/10

(54) **Drosselklappen-Einrichtung für eine Saugrohranlage eines Verbrennungsmotors**
Throttle valve apparatus for an intake manifold of a combustion engine
Dispositif d'étranglement à soupape pour collecteur d'admission d'un moteur à combustion

(30) Priorität: 26.02.1997 DE 19707599
(43) Veröffentlichungstag der Anmeldung: 02.09.1998
(73) Patentinhaber: MAHLE Filtersysteme GmbH, 70376 Stuttgart (DE)
(72) Erfinder: Jensen, Hans, 73237 Kirchheim/Teck (DE); Möhle, Rolf, 74626 Bretzfeld (DE); Schwalk, Bernhard, 70437 Stuttgart (DE)
(74) Vertreter: Patentanwalts-Partnerschaft Rotermund + Pfusch

(56) Entgegenhaltungen:
- EP-A- 0 708 232
- EP-A- 0 726 388
- WO-A-96/31692
- DE-A- 4 329 522
- US-A- 5 186 126
- US-A- 5 350 154

## Beschreibung

Die Erfindung betrifft eine Drosselklappen-Einrichtung für eine Saugrohranlage eines Verbrennungsmotors nach dem Oberbegriff des Patentanspruchs 1.

Eine solche Einrichtung ist beispielsweise aus EP 0 726 388 A1 bekannt. Diese bekannte Einrichtung ist ein gemeinsames Bauteil für sämtliche Drosselklappen einer Saugrohranlage, das zwischen einem gemeinsamen Flansch der Saugrohranlage und dem Motorblock, an dem die Saugrohranlage anzuflanschen ist, angebracht wird. Dieses Bauteil besitzt einen komplizierten Aufbau und bereitet Dichtprobleme bei der Verbindung an der Saugrohranlage.

Eine ähnliche, die gleichen Nachteile aufweisende Drosselklappen-Einrichtung ist aus WO 96/31 692 bekannt.

Die Erfindung beschäftigt sich mit dem Problem, eine gattungsgemäße Drosselklappen-Einrichtung konstruktiv möglichst einfach zu gestalten und funktionsmäßig sicher auszubilden.

Besondere Bedeutung wird einer einfach erzielbaren dichten Anbringung an der Saugrohranlage beigemessen.

Eine Lösung hierzu zeigt eine gattungsmäßige Einrichtung mit den kennzeichnenden Merkmalen des Patentanspruchs 1 auf.

Ein herausragender Vorteil dieser Lösung besteht darin, daß die einzelnen Drosselklappen jeweils in einzelnen, getrennt montierbaren Trägern gelagert sind und daß kein Element der Steuereinrichtung der Drosselklappen in irgendeiner Form durch den Stirnwandbereich des an dem Motorblock zu befestigenden, gemeinsamen Flansches eingreift. Dadurch werden Dichtungsprobleme im Stirnwandbereich des Flansches der Ansaugrohranlage von vornherein vermieden.

Zweckmäßige und vorteilhafte Ausgestaltungen der Erfindung sind Gegenstand der Unteransprüche und werden nachfolgend anhand eines Ausführungsbeispieles noch näher erläutert werden.

Ein solches Ausführungsbeispiel ist in der Zeichnung dargestellt.

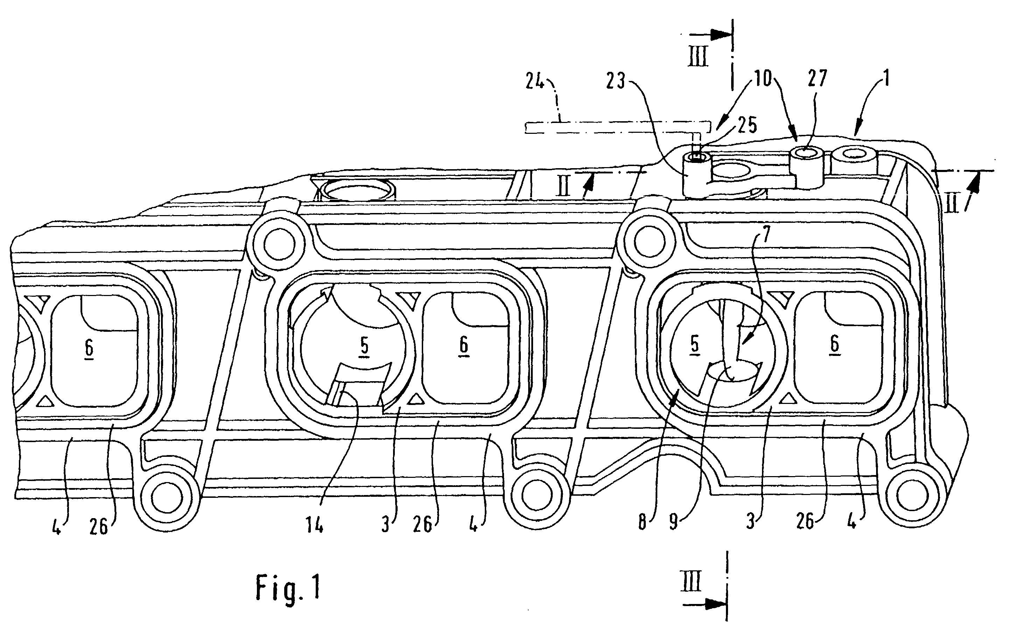

Es zeigen
- Fig. 1: eine perspektivische Ansicht auf einen Ausschnitt eines Anschlußflansches einer Saugrohranlage mit zwei benachbarten Zweikanal-Saugrohren,

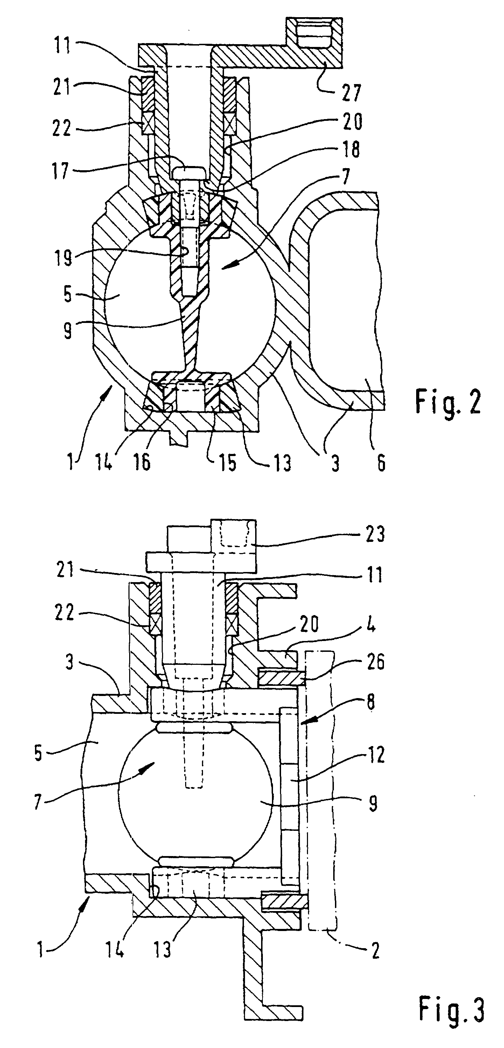

- Fig. 2: einen Schnitt durch ein Saugrohres mit eingebauter Drosselklappe nach Linie II-II in Fig. 1,
- Fig. 3: einen Schnitt durch den Steuer-Kanal eines Saugrohres mit eingebauter Drosselklappe nach Linie III-III in Fig. 1,

Bei einer Saugrohranlage 1 für einen Verbrennungsmotor 2 münden mehrere Saugrohre 3, von denen jedes einem Zylinder des Verbrennungsmotors 2 zugeordnet ist, in einen gemeinsamen Flansch 4 der Saugrohranlage 1. Über diesen Flansch 4 ist die Saugrohranlage 1 an dem Verbrennungsmotor 2 befestigt.

Die einzelnen Saugrohre 3 bestehen jeweils aus zwei getrennten Kanälen, nämlich einem durchflußsteuerbaren Steuer-Kanal 5 und einem zweiten Kanal 6 mit einem unveränderbaren Strömungsquerschnitt.

Zur Durchflußsteuerung ist in jedem Steuerkanal 5 eine Drosselklappeneinrichtung 7 eingebaut.

Eine solche Drosselklappeneinrichtung besteht jeweils aus einem Träger 8, einer in diesem gelagerten Drosselklappe 9 sowie einem über ein Antriebselement 24 zu einer zentralen Steuereinrichtung 10 führenden Verstellbolzen 11, über den die Drosselklappe 9 verstellt wird.

Der Träger 8 setzt sich zusammen aus einem Ring 12, an den senkrecht zu dessen Ringebene zwei Lagerböcke 13 angeformt sind. In den Lagerböcken 13 ist die Drosselklappe 9 mit einer parallel zu der Ebene des Ringes 12 des Trägers 8 verlaufenden Drehachse gelagert. Der Träger 8 ist von der Stirnseite des Flansches 4 aus in einen zugeordneten Steuer-kanal 5 eingeschoben und zwar derart, daß der Träger 8 nicht über die Stirnfläche des Flansches 4 hinausragt. Das Einschieben des Trägers 8 geschieht dadurch, daß dessen Lagerböcke 13 in formschlüssig angepaßte Nuten 14 in der Außenwand des Steuerkanales 5 eingeführt werden. Die Drosselklappe 9 lagert über von ihr ausgehende Lagerzapfen 15 in zugeordneten Lageraugen 16 der Lagerböcke 13.

Die Lageraugen 16 sind jeweils als den zugehörigen Lagerbökke 13 vollständig durchdringende Öffnungen ausgeführt. Auf diese Weise kann durch eines dieser Lageraugen 16 ein Verstellbolzen 11 form- und kraftschlüssig in den zugehörigen Lagerzapfen 15 der Drosselklappe 9 eingreifen. Für einen Kraftschluß in Achsrichtung des Verstellbolzens 11 ist dieser in dieser Richtung hohl ausgeführt und damit zur Aufnahme einer Befestigungsschraube 17 geeignet. Diese Befestigungsschraube 17 stützt sich in dem Verstellbolzen 11 an einem Ringbund 18 ab und greift mit ihrem Gewinde in eine Gewindebohrung 19 der Drosselklappe 9 ein. Anstelle dieser Schraubverbindung ist auch eine kraftschlüssige Rast- oder Schnappverbindung möglich.

Gelagert und geführt ist der Verstellbolzen 11 in einem rohrförmigen Abschnitt 20 der Außenwand des Steuerkanals 5. Zur Führung befindet sich innerhalb des rohrförmigen Abschnittes 20 ein in diesem eingeschobenes Gleitlager 21.

Für einen dichten Abschluß zwischen dem Innenraum eines Steuerkanals 5 und der diesen umgebenden Atmosphäre sorgt innerhalb des rohrförmigen Abschnittes 20 eine Radialdichtung 22, die radial außen in dem rohrförmigen Abschnitt 20 und radial innen an dem Verstellbolzen 11 jeweils dicht anliegt.

Die Verstellbolzen 11 sind jeweils an ihren der Drosselklappe 9 abgewandten Enden mit einem Hebel 23 versehen bzw. zu einem solchen ausgebildet. An dem jeweiligen Ende dieser Hebel 23 greift jeweils ein die Hebel 23 untereinander verbindendes Antriebselement 24 in der Form einer einfachen Stange an. Die Anlenkung der Hebel 23 an das Antriebselement 24 erfolgt jeweils über Kugelgelenke 25. Von diesen Kugelgelenken kann die Kugelschale an die Enden der Hebel 23 angeformt sein. In diesem Fall sind die Kugelköpfe jeweils an dem Antriebselement 24 vorgesehen. Die Kugelköpfe können dabei jeweils über eine Art Schnappverbindung mit den Kugelschalen verbunden sein. Das Antriebselement 24 in der Form einer Stange verschwenkt die Hebel 23 der Verstellbolzen 11 gleichermaßen, so daß sämtliche an ein Antriebselement 24 angelenkte Verstellbolzen 11 gleichmäßig verdreht werden, was in gleicher Weise für die mit diesen Verstellbolzen 11 verbundenen Drosselklappen 9 gilt. Die Verschwenkbewegung der Verstellbolzen 11 kann über einen zusätzlich an einem der Verstellbolzen angeformten Hebel 27 in einen der Verstellbolzen, das heißt in denjenigen mit dem Zusatz-Hebel 27, eingeleitet werden. Die Übertragung auf die anderen Verstellbolzen 11 erfolgt dann über das diese miteinander verbindende Antriebselement 24, das in der Form einer Stange mit Kugelköpfen zur Aufnahme der Kugelschalen der Hebel 23 ausgebildet ist.

Sämtliche Teile der Drosselklappen-Einrichtung sind vorzugsweise aus Kunststoff und daher sehr wirtschaftlich herstellbar.

Die Träger 8 greifen nicht in die Stirnfläche des gemeinsamen Flansches 4 der Saugrohranlage 1 ein, so daß die Flanschdichtung 26 durch die Teile der Drosselklappen-Einrichtung unbeeinflußt bleibt. Damit ist eine Dichtung des Flansches 4 gegenüber dem Verbrennungsmotor 2 in einer einfachen und sicheren Weise möglich, wie sie üblicherweise bei Flanschen von Saugrohranlagen gegeben ist, in deren Bereich keine Drosselklappen-Einrichtungen angebracht sind.

## Patentansprüche

1. Drosselklappen-Einrichtung mit in Trägern drehbar gelagerten Drosselklappen (9) für eine aus mehreren Zweikanal-Saugrohren (3) bestehende, über einen gemeinsamen Flansch (4) an dem Zylinderkopf eines Motors anflanschbare Saugrohranlage (1), wobei jeweils eine Drosselklappe (9) in einem der beiden Kanäle der einzelnen Saugrohre (3) im Bereich des gemeinsamen Flansches (4) angeordnet und durch eine außerhalb des jeweiligen Kanales liegende Steuereinrichtung verstellbar ist,
**gekennzeichnet durch die Merkmale,**
- die Träger (8) sind jeweils ein Ring (12) mit zwei gegenüberliegenden Lagerböcken (13) zur Aufnahme der jeweiligen Drosselklappe (9),
- in den Lagerböcken (13) ist die Drosselklappe (9) in einer parallel zur Ebene des Ringes (12) verlaufenden Achse drehbar gelagert,
- jeder Träger (8) ist durch die in dem gemeinsamen Flansch (4) jeweils liegende Steuer-Kanal (5) Öffnung verdrehfest einschiebbar,
- jeder Träger (8) ragt bei einem in seinen zugehörigen Steuerkanal (5) eingebauten Zustand nicht aus der Stirnfläche des gemeinsamen Flansches (4) heraus,
- durch mindestens einen der beiden Lagerböcke (13) eines Trägers (8) hindurch ist in Richtung der Drehachse der betreffenden Drosselklappe (9) ein von der Steuereinrichtung (10) ausgehender Verstellbolzen (11) kraftschlüssig mit der Drosselklappe (9) verbindbar,
- jeder Verstellbolzen (11) ist in einem in der Außenwand des Steuerkanals (5) vorgesehenen, ihm zugeordneten, kreiszylindrischen Rohrabschnitt (20) drehbar gelagert,
- in jedem zylindrischen Rohrabschnitt (20) ist der zugehörige Verstellbolzen (11) mit Bezug auf einen Gasaustritt zwischen dem Inneren des Steuerkanals (5) und der Atmosphäre dicht gelagert.

2. Drosselklappen-Einrichtung nach Anspruch 1,
**dadurch gekennzeichnet,**
daß die Lagerböcke (13) der Träger (8) in Nuten (14) der Steuerkanäle (5) einschiebbar sind.

3. Drosselklappen-Einrichtung nach Anspruch 1 oder 2,
**dadurch gekennzeichnet,**
daß die Verstellbolzen (11) in Längsrichtung hohl mit einem Ringbund (18) ausgebildet sind, um die Verstellbolzen (11) mittels einer diese jeweils durchgreifenden Schraube (17) in Achsrichtung fixieren zu können.

4. Drosselklappen-Einrichtung nach einem der vorhergehenden Ansprüche,
**dadurch gekennzeichnet,**
daß die Verstellbolzen (11) jeweils über einen verdrehsicheren Formschluß in die Drosselklappen (9) eingreifen.

5. Drosselklappen-Einrichtung nach einem der vorhergehenden Ansprüche,
**dadurch gekennzeichnet,**
daß zur dichten Lagerung der Verstellbolzen (11) in den kreiszylindrischen Wandabschnitten (20) der Steuerkanäle (5) jeweils eine Radialdichtung (22) dient.

6. Drosselklappen-Einrichtung nach einem der vorhergehenden Ansprüche,
**dadurch gekennzeichnet,**
daß innerhalb der kreiszylindrischen Wandabschnitte (20) der Steuerkanäle (5) die Verstellbolzen (11) jeweils in einem eingeschobenen Gleitlager (21) gelagert sind.

7. Drosselklappen-Einrichtung nach einem der vorhergehenden Ansprüche,
**dadurch gekennzeichnet,**
daß die einzelnen Drosselklappen (9) der Saugrohranlage (1) über ein an den Verstellbolzen (21) gemeinsam angreifendes Antriebselement (24) verstellbar sind.

8. Drosselklappen-Einrichtung nach Anspruch 7,
**dadurch gekennzeichnet,**
daß das Antriebselement (24) als Bestandteil der Steuereinrichtung (10) die Verstellbolzen (11) über von den Achsen der Verstellbolzen (11) ausgehende Hebelarme antreibt.

## Claims

1. Throttle valve device with throttle valves (9) rotatably mounted in carriers for an intake manifold installation (1) consisting of a plurality of two-duct intake manifolds (3) and which can be flanged to the cylinder head of an engine by a common flange (4), a throttle valve (9) being arranged in one of the two ducts of the individual intake manifolds (3) respectively in the region of the common flange (4) and being adjustable by a control device located outside of the respective duct, characterised by the features,
- the carriers (8) are each a ring (12) with two opposing bearing blocks (13) for receiving the respective throttle valve (9),
- the throttle valve (9) is rotatably mounted in the bearing blocks (13) in an axis extending parallel to the plane of the ring (12),
- each carrier (8) can be non-rotatably inserted through the control duct (5) aperture respectively located in the common flange (4),
- each carrier (8) does not project beyond the end face of the common flange (4) when fitted in its associated control duct (5),
- an adjusting pin (11) issuing from the control device (10) can be connected with non-positive fit to the throttle valve (9) through at least one of the two bearing blocks (13) of a carrier (8) in the direction of the axis of rotation of the relevant throttle valve (9),
- each adjusting pin (11) is rotatably mounted in a circular cylindrical pipe portion (20) associated therewith and provided in the outer wall of the control duct (5),
- the associated adjusting pin (11) is mounted in each cylindrical pipe section (20) so as to be tight with respect to a gas outlet between the interior of the control duct (5) and the atmosphere.

2. Throttle valve device according to claim 1, characterised in that the bearing blocks (13) of the carriers (8) can be inserted into grooves (14) of the control ducts (5).

3. Throttle valve device according to claim 1 or 2, characterised in that the adjusting pins (11) are hollow in the longitudinal direction and have an annular collar (18) in order to be able to fix the adjusting pins (11) in the axial direction by a screw (17) penetrating it in each case.

4. Throttle valve device according to one of the preceding claims, characterised in that the adjusting pins (11) each engage in the throttle valves (9) via a non-rotatable interlocking fit.

5. Throttle valve device according to one of the preceding claims, characterised in that a respective radial seal (22) provides a tight bearing for the adjusting pins (11) in the circular cylindrical wall portions (20) of the control ducts (5).

6. Throttle valve device according to one of the preceding claims, characterised in that the adjusting pins (11) are each mounted in an inserted slide bearing (21) inside the circular cylindrical wall portions (20) of the control ducts (5).

7. Throttle valve device according to one of the preceding claims, characterised in that the individual throttle valves (9) of the intake manifold (1) can be adjusted via a drive element (24) which acts jointly on the adjusting pins (21).

8. Throttle valve device according to claim 7, characterised in that the drive element (24), as a component of the control device (10), drives the adjusting pins (11) via lever arms issuing from the axes of the adjusting pins (11).

## Revendications

1. Dispositif de soupapes d'étranglement comportant des soupapes d'étranglement (9) montées tournantes dans des supports, pour un collecteur d'admission (1) constitué d'une pluralité de tubulures d'admission (3) à deux canaux, et pouvant être monté par bridage par l'intermédiaire d'une bride commune (4) sur la culasse d'un moteur, une soupape d'étranglement (9) étant disposée dans l'un des deux canaux de chacune des tubulures d'admission (3) dans la zone de la bride (4) commune et pouvant être réglée par un dispositif de commande situé à l'extérieur dudit canal,
caractérisé par les particularités suivantes,
- les supports (8) sont chacun constitués d'un anneau (12) comportant deux paliers (13) situés en regard l'un de l'autre destinés à recevoir la soupape d'étranglement (9) correspondante,
- dans les paliers (13), la soupape d'étranglement (9) est montée tournante dans un axe qui s'étend parallèlement au plan de l'anneau (12),
- chaque support (8) peut être inséré sans rotation possible par l'orifice dans le canal de commande (5) situé dans la bride commune (4),
- chaque support (8), à l'état monté dans son canal de commande (5) correspondant ne fait pas saillie par rapport à la face frontale de la bride commune (4),
- un goujon de réglage (11), partant du dispositif de commande (10), peut être assemblé par force à la soupape d'étranglement (9) à travers au moins l'un des deux paliers (13) d'un support (8), dans la direction de l'axe de rotation de la soupape d'étranglement (9) concernée,
- chaque goujon de réglage (11) est monté tournante dans une section de tube (20) circulaire qui lui est associée, prévue dans la paroi extérieure du canal de commande (5),
- dans chaque section de tube (20), le goujon de réglage (11) correspondant est monté de manière étanche à l'égard d'une sortie de gaz entre l'intérieur du canal de commande (5) et l'atmosphère.

2. Dispositif de soupapes d'étranglement selon la revendication 1, caractérisé en ce que les paliers (13) des supports (8) peuvent être insérés dans des rainures (14) des canaux de commande (5).

3. Dispositif de soupapes d'étranglement selon l'une des revendications 1 et 2, caractérisé en ce que les goujons de réglage (11) ont une configuration creuse dans la direction longitudinale avec une collerette annulaire (18), pour pouvoir fixer dans la direction axiale les goujons de réglage (11) au moyen d'une vis (17) traversant chacun d'eux.

4. Dispositif de soupapes d'étranglement selon l'une des revendications précédentes, caractérisé en ce que les goujons de réglage (11) viennent en prise dans les soupapes d'étranglement respectives (9), par une correspondance de forme les solidarisant en rotation.

5. Dispositif de soupapes d'étranglement selon l'une des revendications précédentes, caractérisé en ce que des joints radiaux (22) respectifs servent au montage étanche des goujons de réglage (11) dans les sections de tube (20) circulaires des canaux de commande (5).

6. Dispositif de soupapes d'étranglement selon l'une des revendications précédentes, caractérisé en ce que les goujons de réglage (11) sont montés chacun dans un palier de glissement (21) inséré, à l'intérieur des sections de tube (20) circulaire des canaux de commande (5).

7. Dispositif de soupapes d'étranglement selon l'une des revendications précédentes, caractérisé en ce que les soupapes d'étranglement individuelles (9) du collecteur d'admission (1) sont réglables par l'intermédiaire d'un élément d'entraînement (24) attaquant en commun les goujons de réglage (11).

8. Dispositif de soupapes d'étranglement selon la revendication 7, caractérisé en ce que l'élément d'entraînement (24) en tant que composant du dispositif de commande (10) entraîne les goujons de réglage (11) par l'intermédiaire de leviers partant des axes des goujons de réglage (11).
